# NEUE EUROPÄISCHE PATENTSCHRIFT

(11) **EP 2 696 708 B2**
(45) Veröffentlichungstag und Bekanntmachung des Hinweises auf die Entscheidung über den Einspruch: **28.12.2022**
(45) Hinweis auf die Patenterteilung: 11.10.2017
(21) Anmeldenummer: 12715582.8
(22) Anmeldetag: 02.04.2012
(51) Int. Cl.: A24C 5/32, A24C 5/47, B65G 47/84

(54) **FÖRDERUNG VON STABFÖRMIGEN ARTIKELN DER TABAK VERARBEITENDEN INDUSTRIE**
CONVEYING ROD-LIKE ARTICLES IN THE TOBACCO-PROCESSING INDUSTRY
TRANSPORT D'ARTICLES EN FORME DE TIGE DE L'INDUSTRIE DE TRAVAIL DU TABAC

(30) Priorität: 14.04.2011 DE 102011007428
(43) Veröffentlichungstag der Anmeldung: 19.02.2014
(60) Teilanmeldung: 17181352.0
(73) Patentinhaber: Körber Technologies GmbH, 21033 Hamburg (DE)
(72) Erfinder: KALUS, Peter, 21039 Escheburg (DE); ROTTMANN, Franz, 21509 Glinde (DE); SCHLISIO, Siegfried, 21502 Geesthacht (DE); FOLGER, Manfred, 21035 Hamburg (DE); PLÄHN, Dieter, 21357 Barum (DE); KLEINE WÄCHTER, Michael, 23881 Lankau (DE); PAWELKO, Karl-Heinz, 21436 Marschacht (DE); STÜBER, Reinhard, 21465 Reinbek (DE)
(74) Vertreter: Seemann & Partner Patentanwälte mbB
(86) Internationale Anmeldenummer: PCT/EP2012/001456
(87) Internationale Veröffentlichungsnummer: WO 2012/139720

(56) Entgegenhaltungen:
- EP-A1- 1 287 753
- EP-A1- 1 466 535
- EP-A1- 1 525 811
- EP-A1- 1 588 960
- EP-A1- 1 702 523
- EP-A2- 2 145 552
- EP-A2- 2 625 971
- WO-A1-2010/012420
- WO-A2-99/56568
- DE-A1- 3 623 129
- DE-A1- 3 735 006
- US-A- 3 952 865

## Beschreibung

Die Erfindung betrifft ein Verfahren zum Fördern von stabförmigen Artikeln, insbesondere Filterzigaretten oder deren stabförmige Komponenten, wobei die stabförmigen Artikel in Aufnahmemulden von Fördertrommeln unter Rotation der Fördertrommeln queraxial gefördert werden.

Ferner betrifft die Erfindung eine Anordnung zum Fördern von stabförmigen Artikeln, insbesondere Filterzigaretten oder deren Komponenten, mit mehreren, um jeweils eine eigene Rotationsachse rotierenden oder rotierbaren Fördertrommeln zur queraxialen Förderung von stabförmigen Artikeln der Tabak verarbeitenden Industrie.

Außerdem betrifft die Erfindung eine Maschine der Tabak verarbeitenden Industrie, insbesondere Filteransetzmaschine, zur Herstellung von stabförmigen Artikeln der Tabak verarbeitenden Industrie, insbesondere Filterzigaretten.

In Maschinen der Tabak verarbeitenden Industrie, insbesondere Filteransetzmaschinen, werden Fördertrommeln eingesetzt, um Zigaretten, Filterstücke oder deren Komponenten zu transportieren. Unter dem Begriff "Komponenten" von den Zigaretten und Filterstäben werden im Sinne der Erfindung auch Abschnitte von Papier und dergleichen aus flächigem und/oder bahnförmigem Material verstanden, z.B. Abschnitte und/oder Bahnen von Zigarettenpapier, Filterpapier oder Belagpapier zum Verbinden von Tabakstücken mit Filterstopfen.

Das Fördern der vorgenannten Gegenstände während der Herstellung von Zigaretten, Filtern sowie Filterzigaretten wird bei modernen Produktionsmaschinen der Tabak verarbeitenden Industrie im Allgemeinen mittels Fördertrommeln durchgeführt, deren Mantelfläche zum Fördern von stabförmigen Gegenständen als stabförmige Komponenten (Zigaretten, Filterstäben oder Filterstopfen, Filterzigaretten) mit Mulden zum Aufnehmen der Gegenstände versehen sind. Zum Fördern von blattförmigen und/oder bahnförmigen Gegenständen (Belagpapierabschnitte und/oder -bahnen) sind Fördertrommeln vorgesehen, deren Mantelflächen im Wesentlichen glatt ist.

Während der Förderung werden diese Gegenstände der Tabak verarbeitenden Industrie von Saugluft auf den Fördertrommeln gehalten, die an entsprechenden Kanälen, meist Bohrungen, anliegt. Diese Kanäle sind im Allgemeinen in Reihen angeordnet, deren Längen den Abmessungen der zu transportierenden Gegenstände quer zur Transportrichtung entsprechen.

In Filteransetzmaschinen werden auf den Fördertrommeln stabförmige Artikel, wie z.B. Tabakstöcke oder Filterstopfen bzw. Filterstäbe, queraxial in Aufnahmemulden der Fördertrommel gefördert. Hierbei sind die Aufnahmemulden in vorbestimmten Teilungsabständen auf der Umfangsfläche der Fördertrommel angeordnet.

Unter Teilungsabstand wird der queraxiale Abstand der Aufnahmemulden verstanden. Der Abstand wird dabei vom Muldenmittelpunkt der Aufnahmemulde zum darauffolgenden Muldenmittelpunkt der benachbarten Aufnahmemulde des auf der Oberfläche die stabförmigen Rauchartikel(gruppen) transportierenden Muldenförderers oder von Muldengrund zu Muldengrund bei z.B. einer prismenförmigen Aufnahmemulde gemessen. Der Teilungsabstand bei einem Trommelförderer, auch als Fördertrommel bezeichnet, ist der queraxiale Abstand bzw. die Länge des (Kreis-)Bogens zwischen (benachbarten) Muldenmittelpunkten auf der Kreislinie, auf der die Muldenmittelpunkte bzw. Muldenmittelpunktsachsen der Mulden angeordnet sind.

Ferner offenbart EP 1 466 535 A1 ein Verfahren zum Vereinigen von Rauchartikelkomponenten bzw. eine Maschine der Tabak verarbeitenden Industrie, wobei für die Artikel einer ersten und einer zweiten Gruppe jeweils eine Belageinrichtung und eine gemeinsame Rolleinrichtung vorgesehen sind. Hierbei werden die Rauchartikelgruppen auf verschwenkbaren Ärmchen angeordnet, wobei an einer ersten Belageinrichtung eine Gruppe der Rauchartikelgruppen mit einem Verbindungsblättchen versehen wird.

Ausgehend von diesem Stand der Technik besteht die Aufgabe der vorliegenden Erfindung darin, die Förderung von stabförmigen Artikeln an einer Maschine der Tabak verarbeitenden Industrie, beispielsweise einer Filteransetzmaschine, für einen schnellen Durchmesserformatwechsel auf einfache Weise zu ermöglichen, wobei der konstruktive Aufwand möglichst gering gehalten werden soll. Bei einem Verfahren zum Fördern von stabförmigen Artikeln der Tabak verarbeitenden Industrie, insbesondere Filterzigaretten oder deren stabförmige Komponenten ist vorgesehen, dass die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten stabförmigen Artikel von einer Fördertrommel an eine nachfolgende Fördertrommel übergeben werden, wobei weiter vorgesehen ist, dass bei einem Wechsel der zu fördernden stabförmigen Artikel von stabförmigen Artikeln einer ersten Art mit einem vorbestimmten Durchmesser zu stabförmigen Artikeln einer zweiten Art mit einem vorbestimmten Durchmesser, wobei der Durchmesser der Artikel der ersten Art und der Durchmesser der Artikel der zweiten Art sich voneinander unterscheiden, der Teilungsabstand der Aufnahmemulden wenigstens einer Fördertrommel in Abhängigkeit der zu fördernden stabförmigen Artikeln derart geändert wird, dass der Abstand mindestens einer Anlagefläche der Aufnahmemulden der Fördertrommel zur Rotationsachse der Fördertrommeln für die stabförmigen Artikel der ersten Art und der Abstand derselben Anlagefläche derselben Aufnahmemulden der Fördertrommel zur Rotationsachse der Fördertrommeln für die Artikel der zweiten Art unterschiedlich sind.

Hierbei ist vorgesehen, dass bei einer Maschine der Tabak verarbeitenden Industrie, bei der die stabförmigen Artikel unter Verwendung von Fördertrommeln queraxial gefördert werden, ohne Austausch von Fördertrommeln und ohne Änderung der Position der Trommeln an der Filteransetzmaschine die Fördertrommeln derart eingestellt werden, dass unabhängig vom Durchmesser der geförderten oder zu fördernden stabförmigen Artikel die Mittenlängsachsen der geförderten stabförmigen Artikel stets auf demselben Kreisbogen der Mittenlängsachsen der Artikel gefördert werden, wobei der Radius des Kreisbogens für die Mittenlängsachsen der zu fördernden stabförmigen Artikel an der jeweiligen Fördertrommel konstant gehalten wird oder ist.

Durch die Änderung des Teilungsabstands der Muldenmittenachsen der Aufnahmemulden, der in Abhängigkeit des Durchmessers der zu fördernden oder geförderten stabförmigen Artikel bei einem Produkt- oder einem Formatwechsel verändert wird, wird erreicht, dass die Kreisbögen der Mittenlängsachsen der stabförmigen Artikel der ersten Art und der Mittenlängsachsen der stabförmigen Artikel der zweiten Art denselben, annähernd konstanten Radius aufweisen. Dadurch wird ein schneller Produktwechsel sowie Formatwechsel an beispielsweise einer Filteransetzmaschine ermöglicht, da zum Beispiel bei einem schnellen Wechsel der Herstellung von Filterzigaretten mit einem Durchmesser von beispielsweise 8 mm (als stabförmige Artikel einer ersten Art) zu herzustellenden Filterzigaretten mit einem Durchmesser von 5 mm (als Artikel einer zweiten Art) durch die Anpassung des Teilungsabstandes der Aufnahmemulden der Fördertrommel(n) die stabförmigen Artikel ohne starke mechanische Beeinträchtigung von Fördertrommel zu Fördertrommel nach einem Formatwechsel gefördert werden. Hierbei wird die mechanische Belastung der empfindlichen geförderten Artikel im Übergabebereich oder im Übergabepunkt zwischen zwei Fördertrommeln herabgesetzt oder minimiert, wodurch die zu fördernden stabförmigen Artikel schonend von Fördertrommeln zur nachfolgenden Fördertrommel übergeben werden.

Nach Beendigung des Herstellungsprozesses mit stabförmigen Artikeln einer ersten Art werden für die Förderung der Artikel der zweiten Art die Teilungsabstände der Aufnahmemulden an wenigstens einer Fördertrommel verändert sowie angepasst.

Unter stabförmigen Artikeln der Tabak verarbeitenden Industrie im Rahmen der Erfindung werden stabförmige Gegenstände wie z.B. Zigaretten, Filterstäbe oder Filterstopfen oder deren (stabförmige) Komponenten verstanden.

Unter dem Begriff "stabförmige Artikel einer ersten Art" wird eine bestimmte Sorte an zu fördernden stabförmigen Artikeln der Tabak verarbeitenden Industrie verstanden, die einen vorbestimmten Durchmesser aufweisen und beispielsweise an einer Filteransetzmaschine queraxial gefördert werden. Unter dem Begriff "stabförmige Artikel einer zweiten Art" wird eine bestimmte Sorte an zu fördernden stabförmigen Artikeln der Tabak verarbeitenden Industrie verstanden, die einen vorbestimmten Durchmesser aufweisen und z.B. queraxial an einer Filteransetzmaschine gefördert werden und sich im Durchmesser von den stabförmigen Artikeln der ersten Art unterscheiden.

Bei einem Produktions- oder Formatwechsel an einer Filteransetzmaschine von zu fördernden oder geförderten stabförmigen Artikeln einer ersten Art zu stabförmigen Artikeln einer zweiten Art bestehen daher Unterschiede im Durchmesser der zu fördernden stabförmigen Artikel.

Ein Vorteil besteht darin, dass mehrere stabförmige Artikel unterschiedlichen Durchmessers an einer Filteransetzmaschine ohne Austausch aller Fördertrommeln gefördert und produziert werden, wodurch Umbaumaßnahmen bei einem Wechsel von zu fördernden stabförmigen Artikeln einer ersten Art zu stabförmigen Artikeln einer zweiten Art erheblich reduziert werden, da ein aufwändiger Wechsel aller Förderorgane vermieden bzw. nicht ausgeführt wird. Um eine Förderung von stabförmigen Artikeln unterschiedlichen Durchmessers zu gewährleisten, wird der Teilungsabstand der Aufnahmemulden der Fördertrommeln verändert bzw. angepasst.

Somit wird durch das Verfahren erreicht, dass beispielsweise an einer Filteransetzmaschine zwei unterschiedliche Zigarettenformate nacheinander verarbeitet oder hergestellt werden.

Als mindestens eine Anlagefläche einer Aufnahmemulde wird eine Fläche einer Aufnahmemulde verstanden, an der die zu fördernden stabförmigen Artikel (der ersten Art und der zweiten Art) bei Förderung auf der Fördertrommel anliegen, wodurch die Anlagefläche jeweils in berührenden Kontakt mit den aufgenommenen stabförmigen Artikeln ist. Bei Förderung von stabförmigen Artikeln einer ersten Art unterscheidet sich der Abstand der jeweiligen Anlagefläche der Aufnahmemulden der Fördertrommel zur Rotationsachse der Fördertrommeln bei Aufnahme von stabförmigen Artikeln der ersten Art vom Abstand derselben Anlageflächen derselben Aufnahmemulde der Fördertrommel zur Rotationsachse der Fördertrommeln bei Aufnahme von Artikeln der zweiten Art. Dabei werden die nichttauschbaren Aufnahmemulden der Fördertrommel für die Förderung der stabförmigen Artikel der ersten Art und für die Förderung der stabförmigen Artikel der zweiten Art beibehalten, so dass es sich bei den Aufnahmemulden um nicht-austauschbare, nicht geänderte Aufnahmemulden handelt, wodurch die stabförmigen Artikel der ersten Art und die stabförmigen Artikel der zweiten Art in oder auf denselben Aufnahmemulden der Fördertrommel mit und im Kontakt mit denselben beibehaltenen Anlageflächen gefördert werden.

Ferner ist in einer Ausgestaltung des Verfahrens vorgesehen, dass der Teilungsabstand der Aufnahmemulden wenigstens einer Fördertrommel, insbesondere der Teilungsabstand von benachbarten Aufnahmemulden, durch die Variation der Form der Aufnahmemulden und/oder durch die Variation der Position der Aufnahmemulden an der Außenseite der Fördertrommel geändert wird, wodurch die Kreisbögen der Mittenlängsachsen der zu fördernden stabförmigen Artikel, unabhängig von deren Durchmesser, einen konstanten vorbestimmten Radius aufweisen. Hierdurch ergeben sich für unterschiedliche Artikel mit verschiedenen Durchmessern jeweils verschiedene Geometrien oder Positionen zur Rotationsachse der Fördertrommel der Aufnahmemulden.

Überdies zeichnet sich eine Weiterbildung des Verfahrens dadurch aus, dass bei zwei in Förderrichtung der stabförmigen Artikel benachbarten Fördertrommeln für die Förderung von stabförmigen Artikeln im Übergabebereich der stabförmigen Artikel von der einen Fördertrommel auf die nachfolgende Fördertrommel der Kreisbogen der Mittenlängsachsen der stabförmigen Artikel, die auf der Artikel abgebenden Fördertrommel gefördert werden, und der Kreisbogen der Mittenlängsachsen der stabförmigen Artikel, die auf der Artikel aufnehmenden Fördertrommel gefördert werden, sich berühren.

Des Weiteren ist es in einer Ausgestaltung des Verfahrens vorgesehen, dass bei zwei in Förderrichtung der stabförmigen Artikel benachbarten Fördertrommeln für die Förderung von stabförmigen Artikeln der ersten Art die Form und/oder die Position der Aufnahmemulden beider Fördertrommeln derart eingestellt wird, dass im Übergabebereich der stabförmigen Artikel von der einen Fördertrommel, die im Übergabebereich die stabförmigen Artikel abgibt, auf die nachfolgende Fördertrommel der Kreisbogen der Mittenlängsachsen der stabförmigen Artikel der ersten Art, die auf der Artikel abgebenden Fördertrommel gefördert werden, und der Kreisbogen der Mittenlängsachsen der stabförmigen Artikel der ersten Art, die auf der Artikel aufnehmenden Fördertrommel gefördert werden, sich berühren und nach einem Wechsel der zu fördernden stabförmigen Artikel mit einem anderen Durchmesser für die Förderung der stabförmigen Artikel der zweiten Art die Form und/oder die Position der Aufnahmemulden beider Fördertrommeln derart eingestellt sind, dass im Übergabebereich der stabförmigen Artikel von der einen Fördertrommel auf die nachfolgende Fördertrommel der Kreisbogen der Mittenlängsachsen der stabförmigen Artikel der zweiten Art, die auf der Artikel abgebenden Fördertrommel gefördert werden, und der Kreisbogen der Mittenlängsachsen der stabförmigen Artikel der zweiten Art, die auf der Artikel aufnehmenden Fördertrommel gefördert werden, sich berühren.

Bevorzugterweise entspricht bei Aufnahme von stabförmigen Artikeln der ersten Art in den Aufnahmemulden der wenigstens einen Fördertrommel der Kreisbogen der Mittenlängsachsen der stabförmigen Artikel der ersten Art dem Kreisbogen der Mittenlängsachsen der stabförmigen Artikel der zweiten Art bei Aufnahme von stabförmigen Artikeln der zweiten Art in den Aufnahmemulden der wenigstens einen Fördertrommel.

Außerdem ist es bevorzugt, dass die Positionen der Rotationsachsen der Fördertrommeln bei Förderung der stabförmigen Artikel der ersten Art und bei Förderung der stabförmigen Artikel der zweiten Art unverändert bleiben. Die relative Anordnung der Fördertrommeln wird dadurch beibehalten.

Des Weiteren ist es für die Durchführung eines schnellen Produktionswechsels an einer Filteransetzmaschine vorteilhaft, dass die Form der Aufnahmemulden der Fördertrommeln durch Variation des in queraxialer Richtung ausgebildeten Abstandes zwischen wenigstens zwei einander gegenüberliegenden Anlageflächen der Aufnahmemulden für die aufzunehmenden stabförmigen Artikel verändert wird. Insbesondere wird die Form im Querschnitt der Aufnahmemulden variiert, wodurch der Teilungsabstand von benachbarten Aufnahmemulden verändert wird.

Außerdem ist in einer Ausgestaltung des Verfahrens vorgesehen, dass die Position der Aufnahmemulden der Fördertrommeln durch Verschiebung der Aufnahmemulden in radialer Richtung bezogen auf die Rotationsachse der Fördertrommeln verändert wird. Durch die Variation der Position in radialer Richtung ist hierdurch vorgesehen, dass der Teilungsabstand zwischen den Muldenmittelpunkten bzw. Muldengeometrien von zwei benachbarten Aufnahmemulden einer Fördertrommel verändert wird.

Vorzugsweise werden die für die Förderung der stabförmigen Artikel vorgesehenen Fördertrommeln beibehalten.

Außerdem ist bei einer Anordnung zum Fördern von stabförmigen Artikeln der Tabak verarbeitenden Industrie, insbesondere Filterzigaretten oder deren stabförmige Komponenten, mit mehreren, um jeweils eine eigene Rotationsachse rotierenden oder rotierbaren Fördertrommeln zur queraxialen Förderung von stabförmigen Artikeln der Tabak verarbeitenden Industrie vorgesehen, dass die Fördertrommeln in queraxialer Förderrichtung der stabförmigen Artikel hintereinander angeordnet sind, wobei die Fördertrommeln zur Aufnahme von stabförmigen Artikeln jeweils mit Aufnahmemulden mit einer Muldenkontur ausgebildet sind, wobei weiter vorgesehen ist, dass für einen Wechsel der zu fördernden stabförmigen Artikel von stabförmigen Artikeln einer ersten Art mit einem vorbestimmten Durchmesser zu stabförmigen Artikeln einer zweiten Art mit einem vorbestimmten Durchmesser, wobei der Durchmesser der Artikel der ersten Art und der Durchmesser der Artikel der zweiten Art sich voneinander unterscheiden, der Teilungsabstand der Aufnahmemulden wenigstens einer Fördertrommel in Abhängigkeit der zu fördernden stabförmigen Artikel veränderbar ist, so dass der Abstand mindestens einer Anlagefläche der Aufnahmemulden der Fördertrommel zur Rotationsachse der Fördertrommeln für die stabförmigen Artikel der ersten Art und der Abstand derselben Anlagefläche derselben Aufnahmemulden der Fördertrommel zur Rotationsachse der Fördertrommeln für die Artikel der zweiten Art unterschiedlich sind, wobei bei Aufnahme von stabförmigen Artikeln der ersten Art in den Aufnahmemulden der Kreisbogen der Mittenlängsachsen der stabförmigen Artikel der ersten Art dem Kreisbogen der Mittenlängsachsen der stabförmigen Artikel der zweiten Art bei Aufnahme von stabförmigen Artikeln der zweiten Art entspricht.

Beispielsweise weisen Aufnahmemulden einer Fördertrommel bei teilkreisförmigen und U-förmigen Mulden eine Muldenmittenlängsachse auf, so dass gemäß der Erfindung der Kreisbogen der Muldenmittenachsen der Aufnahmemulden für die stabförmigen Artikel der ersten Art und der Kreisbogen der Muldenmittenachsen der Aufnahmemulden für die Artikel der zweiten Art unterschiedlich sind.

Die erfindungsgemäße Förderanordnung oder Fördereinrichtung zum Fördern der stabförmigen Artikel weist mehrere hintereinander angeordnete Fördertrommeln auf, so dass die queraxial hintereinander in einer oder mehreren Reihen angeordneten stabförmigen Artikel queraxial gefördert werden. Insbesondere ist die Anordnung Teil einer Maschine der Tabak verarbeitenden Industrie, insbesondere einer Filteransetzmaschine.

Hierzu ist in einer Weiterbildung der Anordnung vorgesehen, dass die Aufnahmemulden der wenigstens einen Fördertrommel jeweils für die Aufnahme von stabförmigen Artikeln wenigstens eine bewegbare Muldenanlagefläche aufweisen, so dass durch die Bewegung der wenigstens einen Muldenanlagefläche der Teilungsabstand der Aufnahmemulden der Fördertrommel durch die Variation der Form der Aufnahmemulden und/oder durch die Variation der Position der Aufnahmemulden an der Außenseite der Fördertrommel verändert ist.

Insbesondere weist die Anordnung eine Fördertrommel zur queraxialen Förderung von stabförmigen Artikeln auf, wobei die Fördertrommel einen Trommelkörper aufweist. Der Trommelkörper ist dabei mit Aufnahmemulden für die stabförmigen Artikel in Umfangsrichtung des Trommelkörpers ausgebildet. Wenigstens eine Aufnahmemulde ist dabei unter Verwendung von wenigstens zwei parallel nebeneinander angeordneten Auflagestiften oder Stiften gebildet, wobei die Auflagestifte exzentrisch verschwenkbar am Trommelkörper gelagert oder angeordnet sind. Durch entsprechende Einstellmittel wird gewährleistet, dass die Auflagestifte, insbesondere gleichzeitig exzentrisch verschwenkt werden, um den Teilungsabstand zwischen den durch jeweils zwei Auflagestifte gebildeten Aufnahmemulden zu variieren oder in Abhängigkeit der Durchmesser der zu fördernden stabförmigen Artikel anzupassen.

Dazu ist bei der Fördertrommel weiterhin vorgesehen, dass jeweils zwei Auflagestifte parallel nebeneinander angeordnet sind, wobei die Auflagestifte voneinander beabstandet sind, um einen stabförmigen Artikel im als Aufnahmemulde ausgebildeten Zwischenraum zwischen den Auflagestiften aufzunehmen. Durch die voneinander queraxial beabstandeten Auflagestifte ist es möglich, im Zwischenraum zwischen den beiden Auflagestiften eine Aufnahmemulde auszubilden, in der die stabförmigen Artikel aufgenommen werden.

Durch die exzentrische Verschwenkbarkeit der Auflagestifte werden die Form der Aufnahmemulden und somit auch die Lage der Aufnahmemulden entsprechend verändert.

Außerdem ist es bei der Fördertrommel vorgesehen, dass der oder die im Zwischenraum zwischen zwei Auflagestiften aufgenommenen stabförmigen Artikel mit Unterdruck beaufschlagbar sind.

Darüber hinaus zeichnet sich eine Weiterbildung der für die (Förder-)Anordnung verwendeten Fördertrommel dadurch aus, dass die Auflagestifte im Querschnitt rund, insbesondere kreisrund, ausgebildet sind. Hierdurch ergibt sich bei Aufnahme von stabförmigen Artikeln ein näherungsweise linienförmiger Kontakt zwischen den zwei nebeneinander angeordneten Auflagestiften und den stabförmigen Artikeln.

Des Weiteren ist für die Ausgestaltung der Förderanordnung mit mehreren Fördertrommeln eine Fördertrommel vorgesehen, die einen Trommelkörper aufweist, wobei der Trommelkörper mit Aufnahmemulden für die stabförmigen Artikel in Umfangsrichtung des Trommelkörpers ausgebildet ist. Die Aufnahmemulden weisen dabei eine konstante, d.h. nicht veränderbare, Muldenkontur auf. Ferner sind die Aufnahmemulden auf Grundkörpern ausgebildet. Die Grundkörper sind gegenüber dem Trommelkörper der Fördertrommel in radialer Richtung verschiebbar, wobei unter Verwendung von entsprechenden Einstellmitteln der Teilungsabstand zwischen den Aufnahmemulden von zwei benachbarten Aufnahmemulden aufgrund der gleichzeitigen Bewegung der Aufnahmemulden in radialer Richtung verändert wird. Hierbei wird durch eine Hubbewegung der Grundkörper in radialer Richtung der Teilungsabstand entsprechend eingestellt.

Überdies ist bei einer Weiterbildung der Anordnung vorgesehen, dass die Aufnahmemulden der wenigstens einen Fördertrommel in radialer Richtung und/oder wenigstens eine Muldenanlagefläche bewegbar ausgebildet sind.

Insbesondere ist es bei einer Ausgestaltung der Anordnung vorteilhaft, dass wenigstens eine Aufnahmemulde der wenigstens einen Fördertrommel wenigstens einen Stiftkörper oder zwei voneinander beabstandete Stiftkörper aufweist, wobei insbesondere wenigstens ein Stiftkörper oder beide Stiftkörper als Auflagestifte exzentrisch gelagert sind und verdrehbar sind.

Dazu ist weiter vorgesehen, dass bei zwei in Förderrichtung der stabförmigen Artikel benachbarten Fördertrommeln für die Förderung von stabförmigen Artikeln im Übergabebereich der stabförmigen Artikel von der einen Fördertrommel auf die nachfolgende Fördertrommel der Kreisbogen der Mittenlängsachsen der stabförmigen Artikel, die auf der Artikel abgebenden Fördertrommel gefördert werden, und der Kreisbogen der Mittenlängsachsen der stabförmigen Artikel, die auf der Artikel aufnehmenden Fördertrommel gefördert werden, sich berühren.

Außerdem entspricht bei Aufnahme von stabförmigen Artikeln der ersten Art in den Aufnahmemulden der wenigstens einen Fördertrommel der Kreisbogen der Mittenlängsachsen der stabförmigen Artikel der ersten Art dem Kreisbogen der Mittenlängsachsen der stabförmigen Artikel der zweiten Art bei Aufnahme von stabförmigen Artikeln der zweiten Art in den Aufnahmemulden der wenigstens einen Fördertrommel.

Die Aufgabe wird gelöst durch ein Verfahren zum Fördern von stabförmigen Artikeln der Tabak verarbeitenden Industrie, insbesondere Filterzigaretten oder deren stabförmige Komponenten, entsprechend Anspruch 1.

Die Erfindung beruht hierbei auf dem Gedanken, dass eine schnelle Anpassung an den Durchmesser von zu fördernden stabförmigen Artikeln erreicht wird, wenn eine Fördertrommel mit an einem Trommelkörper angeordneten bewegbaren, insbesondere verschwenkbaren, Ärmchen verwendet wird, wobei die Verschwenkung der Ärmchen durch Verwendung einer als Kurvenscheibe vorgesehenen Schwenkkulisse für die Ärmchen erreicht wird, wobei durch Verdrehen der Schwenkkulisse bzw. durch eine entsprechende Einstellung der Schwenkkulisse in Abhängigkeit der zu fördernden stabförmigen Artikel die Ärmchen im ersten Übergabebereich so ausgerichtet sind, um eine schonende Übergabe zwischen der ersten und der zweiten Fördertrommel zu erreichen. Anschließend werden die auf den verschwenkbaren Ärmchen angeordneten stabförmigen Artikel entsprechend der Form der elliptischen Schwenkkulisse verschwenkt, wobei im zweiten Übergabebereich zwischen der zweiten Fördertrommel und der dritten Fördertrommel die Ärmchen im Übergabezeitpunkt so verschwenkt sind, dass eine sanfte Übergabe im zweiten Übergabebereich erreicht wird. Durch die Anpassung der Schwenkkulisse führen bei einem kompletten Umlauf der Fördertrommel die Ärmchen bzw. die Aufnahmemulden der Ärmchen eine elliptische und in sich geschlossene Schwenkbewegung auf. Hierbei liegen die Aufnahmemulden der Ärmchen auf einer elliptischen Bewegungsbahn.

Ohne Änderung der elliptischen Form der Schwenkkulisse wird bei einem Formatwechsel, beispielsweise von stabförmigen Artikeln mit einem Durchmesser von 8 mm zu stabförmigen Artikeln mit einem Durchmesser von 5 mm die Schwenkkulisse in ihrer relativen Ausrichtung bzw. Position zu den zu bewegenden Ärmchen eingestellt, so dass die elliptische Bahn der Muldenmittenachsen der Ärmchen um einen vorbestimmten Winkel verstellt ist, wobei die Form der elliptischen Bahn beibehalten wird.

Dazu ist in einer Ausgestaltung des Verfahrens weiterhin vorgesehen, dass die Artikel auf einer ersten Fördertrommel in den Aufnahmemulden mit einem konstanten Teilungsabstand queraxial zum ersten Übergabebereich gefördert werden, so dass die Mittenlängsachsen der stabförmigen Artikel entlang eines Kreisbogens mit einem vorbestimmten, insbesondere konstanten, Kreisbogenradius auf der ersten Fördertrommel gefördert werden, und/oder dass die stabförmigen Artikel auf der dritten Fördertrommel in den Aufnahmemulden mit einem konstanten Teilungsabstand queraxial weiter gefördert werden, so dass die Mittenlängsachsen der stabförmigen Artikel entlang eines Kreisbogens mit einem vorbestimmten, insbesondere konstanten, Kreisbogenradius auf der dritten Fördertrommel gefördert werden. Hierdurch ist zwischen der ersten und der dritten Fördertrommel, die beide unbewegliche Aufnahmemulden mit jeweils einem konstanten Muldendurchmesser oder einer konstanten Muldenkontur aufweisen, die zweite Fördertrommel mit den verschwenkbaren Ärmchen angeordnet.

Gemäß einer bevorzugten Ausgestaltung ist außerdem vorgesehen, dass die Aufnahmemulden der zweiten Fördertrommel im ersten Übergabebereich und im zweiten Übergabebereich einen Abschnitt einer ellipsenbogenförmigen Bewegungsbahn ausführen.

Des Weiteren ist es bei einer Weiterbildung des Verfahrens vorgesehen, dass
- bei Förderung von stabförmigen Artikeln einer ersten Art die Mittenlängsachsen der stabförmigen Artikel der ersten Art auf der ersten Fördertrommel entlang eines Kreisbogens mit einem vorbestimmten, insbesondere konstanten, Kreisbogenradius gefördert werden und
- bei Förderung von stabförmigen Artikeln einer ersten Art die Mittenlängsachsen der stabförmigen Artikel auf der dritten Fördertrommel entlang eines Kreisbogens mit einem vorbestimmten, insbesondere konstanten, Kreisbogenradius gefördert werden,
- wobei nach einem Wechsel der zu fördernden stabförmigen Artikel bei Förderung von stabförmigen Artikeln einer zweiten Art, deren Durchmesser sich vom Durchmesser der Artikel der ersten Art unterscheidet, die Mittenlängsachsen der stabförmigen Artikel der zweiten Art auf der ersten Fördertrommel entlang eines Kreisbogens mit einem vorbestimmten, insbesondere konstanten, Kreisbogenradius, der vom Kreisbogenradius bei Förderung der stabförmigen Artikel der ersten Art auf der ersten Fördertrommel verschieden ist, gefördert werden und
- wobei bei Förderung von stabförmigen Artikeln einer zweiten Art die Mittenlängsachsen der stabförmigen Artikel der zweiten Art auf der dritten Fördertrommel entlang eines Kreisbogens mit einem vorbestimmten, insbesondere konstanten, Kreisbogenradius, der vom Kreisbogenradius bei Förderung der stabförmigen Artikel der ersten Art auf der dritten Fördertrommel verschieden ist, gefördert werden.

Vorzugsweise werden die für die Förderung der stabförmigen Artikel vorgesehenen Fördertrommeln beibehalten.

Überdies wird die Aufgabe gelöst durch eine Anordnung zum Fördern von stabförmigen Artikeln der Tabak verarbeitenden Industrie, insbesondere Filterzigaretten oder deren stabförmige Komponenten, entsprechend Anspruch 6.

Insbesondere ist es bevorzugt, dass durch die Schwenkkulisse die Aufnahmemulden eine ellipsenförmige, insbesondere eine elliptische, Bewegungsbahn während eines Umlaufs ausführen.

Die erfindungsgemäße Förderanordnung umfasst mehrere Fördertrommeln, wobei wenigstens eine Fördertrommel, die zwischen einer ersten und einer dritten Fördertrommel angeordnet ist, verschwenkbare Ärmchen aufweist. Die erfindungsgemäße Förderanordnung ist dabei vorzugsweise Bestandteil einer Maschine der Tabak verarbeitenden Industrie, insbesondere Filteransetzmaschine. Durch die in Ihrer Ausrichtung einstellbare Schwenkkulisse wird eine sichere Übergabe zwischen zwei Fördertrommeln erreicht, wenn sich bei einem Produktionswechsel der Durchmesser der zu fördernden stabförmigen Artikel verändert. Durch die Anpassung der Position der Schwenkkulisse wird ein sicherer Transport zwischen den Übergabepunkten auf einer Fördertrommel erreicht, wobei während der Förderung der stabförmigen Artikel auf der Fördertrommel mit den verschwenkbaren Ärmchen die Aufnahmemulden bzw. die Mittenlängsachsen der zu fördernden stabförmigen Artikel eine ellipsenförmige Bewegung zwischen den Übergabebereichen ausführen. Hierbei werden unter Verwendung der Schwenkkulisse die Ärmchen mit ihren Aufnahmemulden entlang einer elliptischen Bahn während eines kompletten Umlaufes der Fördertrommel geführt bzw. bewegt.

Erfindungsgemäß ist die Fördertrommel derart ausgebildet, dass für die Förderung von stabförmigen Artikeln einer ersten Art die in den Aufnahmemulden der Fördertrommel angeordneten stabförmigen Artikel mit ihren Mittenlängsachsen auf einer ersten Ellipsenbogenbahn zwischen einem ersten Übergabebereich zur Aufnahme von stabförmigen Artikeln und einem zweiten Übergabebereich zur Abgabe von stabförmigen Artikeln förderbar sind und nach einem Wechsel für die Förderung von stabförmigen Artikeln einer zweiten Art mit einem Durchmesser, der sich vom Durchmesser der Artikel der ersten Art unterscheidet, die in den Aufnahmemulden der Fördertrommel angeordneten stabförmigen Artikel der zweiten Art mit ihren Mittenlängsachsen auf einer zweiten Ellipsenbogenbahn zwischen dem ersten Übergabebereich und dem zweiten Übergabebereich förderbar sind, wobei für den Wechsel der zu fördernden stabförmigen Artikeln die Position der mit den Ärmchen zusammenwirkenden Schwenkkulisse an der Fördertrommel verändert wird oder ist. Hierbei wird eine Schwenkkulisse für die zu verschwenkenden Ärmchen der Fördertrommel verwendet, die eine unveränderbare, d.h. konstante, Form aufweist, so dass die Form der elliptischen Bewegungsbahn bei einem kompletten Umlauf der Fördertrommel nicht verändert wird. Vielmehr wird bei einem Wechsel der zu fördernden stabförmigen Artikel im Durchmesser die relative Position der Schwenkkulisse zu den Ärmchen bzw. zu deren Schwenkachsen eingestellt oder verändert, so dass durch eine Veränderung der Position der Schwenkkulisse eine andere Ellipsenbogenbahn zwischen den Übergabebereichen an der (zweiten) Fördertrommel für die zu fördernden stabförmigen Artikel der ersten Art und für die stabförmigen Artikel der zweiten Art ausgebildet wird.

Ferner wird die Aufgabe gelöst durch eine Maschine der Tabak verarbeitenden Industrie, insbesondere Filteransetzmaschine, zur Herstellung von stabförmigen Artikeln der Tabak verarbeitenden Industrie, insbesondere Filterzigaretten, mit einer voranstehend beschriebenen Anordnung zum Fördern von stabförmigen Artikeln der Tabak verarbeitenden Industrie. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

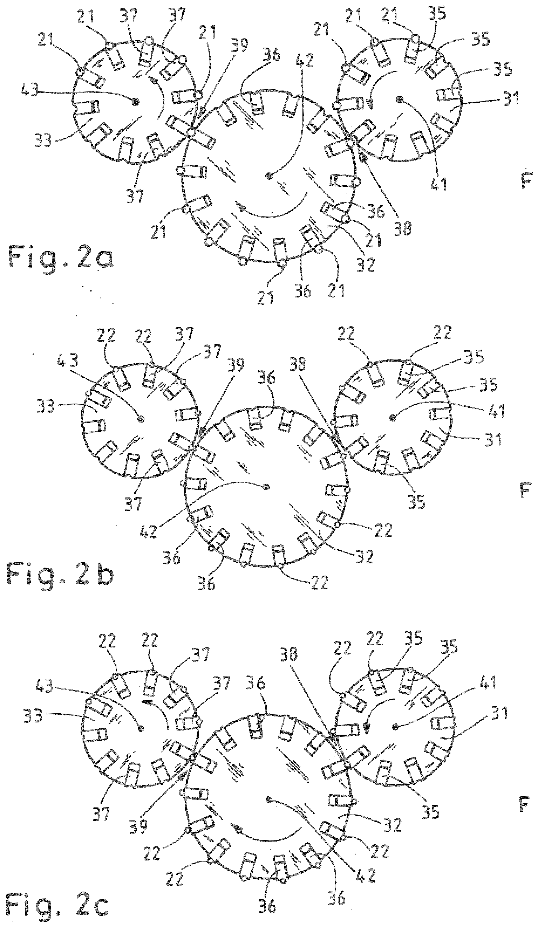

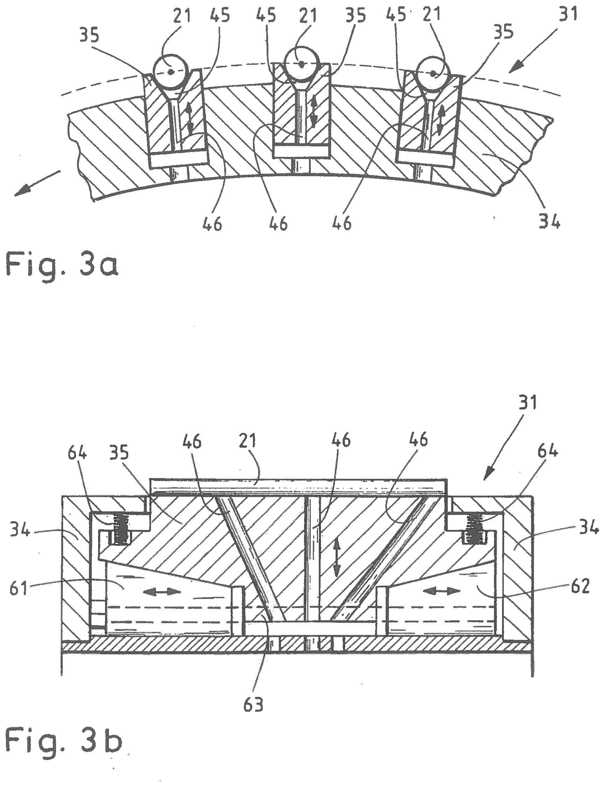

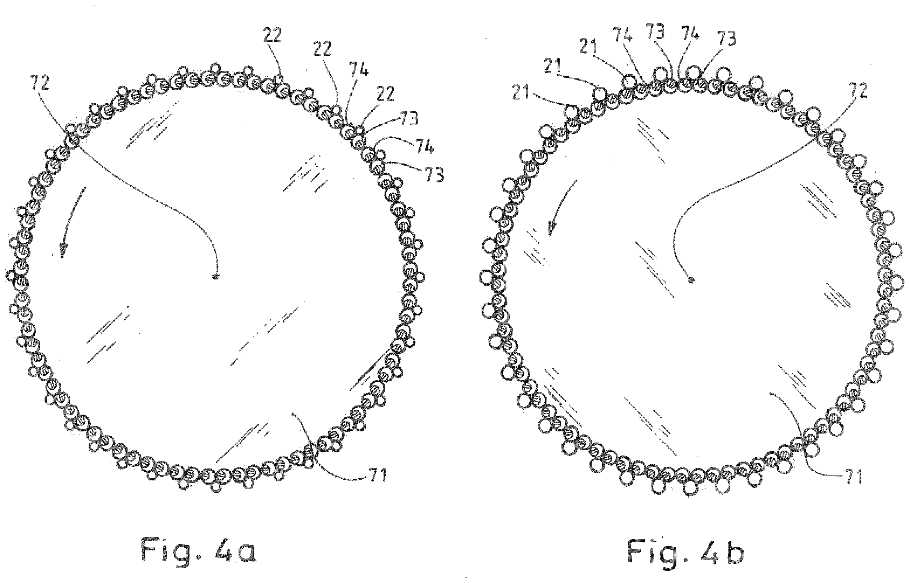

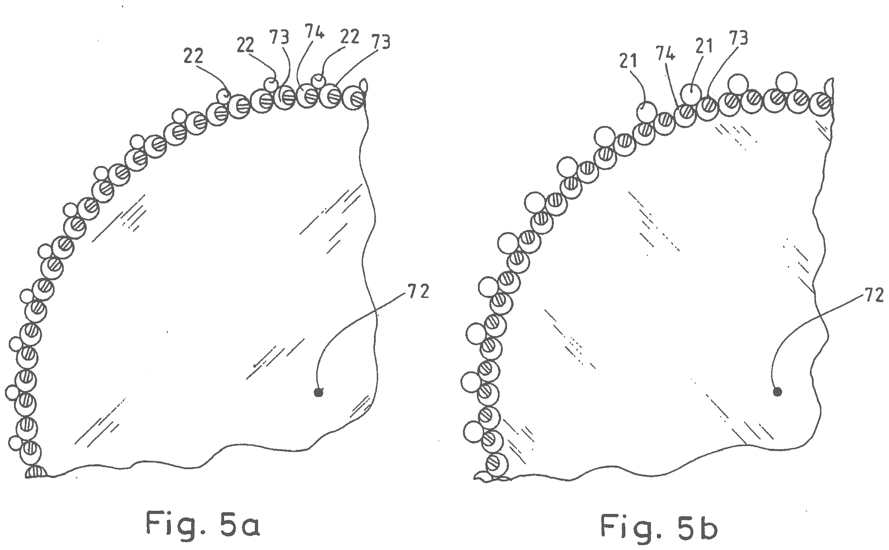

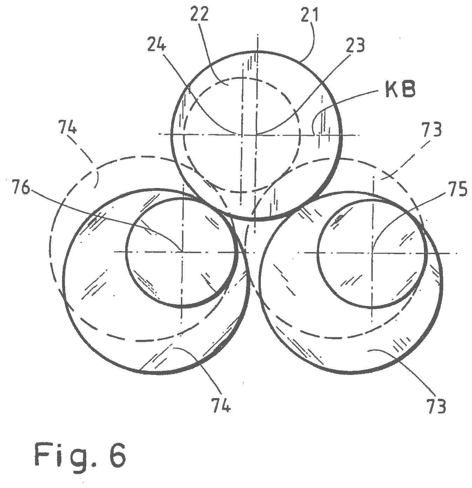

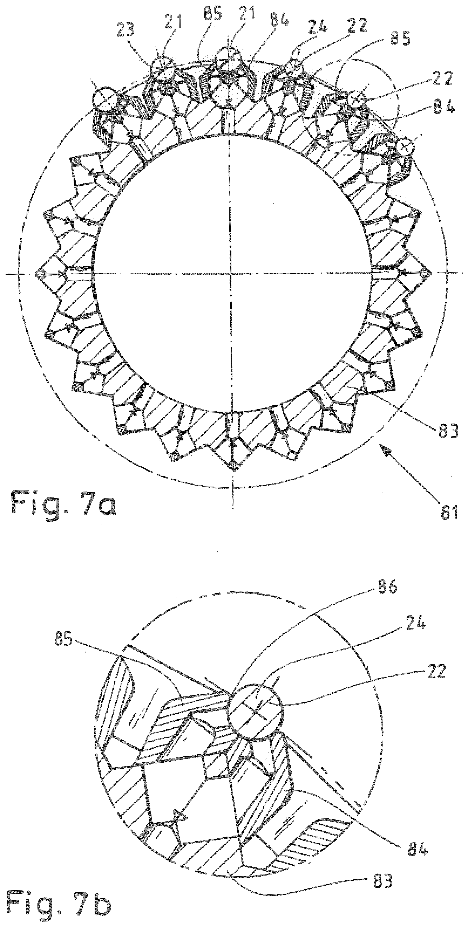

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Die Fig. 2a bis Fig. 7b betreffen Ausführungen, die nicht unter den Wortlaut der Ansprüche fallen. Es zeigen:
- Fig. 1: schematisch eine Filteransetzmaschine zum Herstellen von Filterzigaretten in einer Vorderansicht,
- Fig. 2a bis 2c: schematisch jeweils eine Ansicht einer Anordnung von Fördertrommeln einer Filteransetzmaschine,
- Fig. 3a: schematisch einen Ausschnitt einer Fördertrommel im Querschnitt,
- Fig. 3b: schematisch einen Ausschnitt einer Fördertrommel in einem Längsschnitt,
- Fig. 4a, 4b: jeweils schematisch einen Querschnitt durch eine Fördertrommel mit zentrisch gelagerten Auflagestiften für stabförmige Artikel,
- Fig. 5a, 5b: schematisch einen Ausschnitt der in Fig. 4a, 4b gezeigten Fördertrommel,
- Fig. 6: schematisch eine Ansicht einer Aufnahmemulde mit exzentrisch gelagerten Auflagestiften,
- Fig. 7a: schematisch einen Querschnitt durch eine weitere Ausführungsform einer Fördertrommel mit veränderbaren Aufnahmemulden für stabförmige Artikel,
- Fig. 7b: einen vergrößerten Ausschnitt der in Fig. 7a dargestellten Fördertrommel,

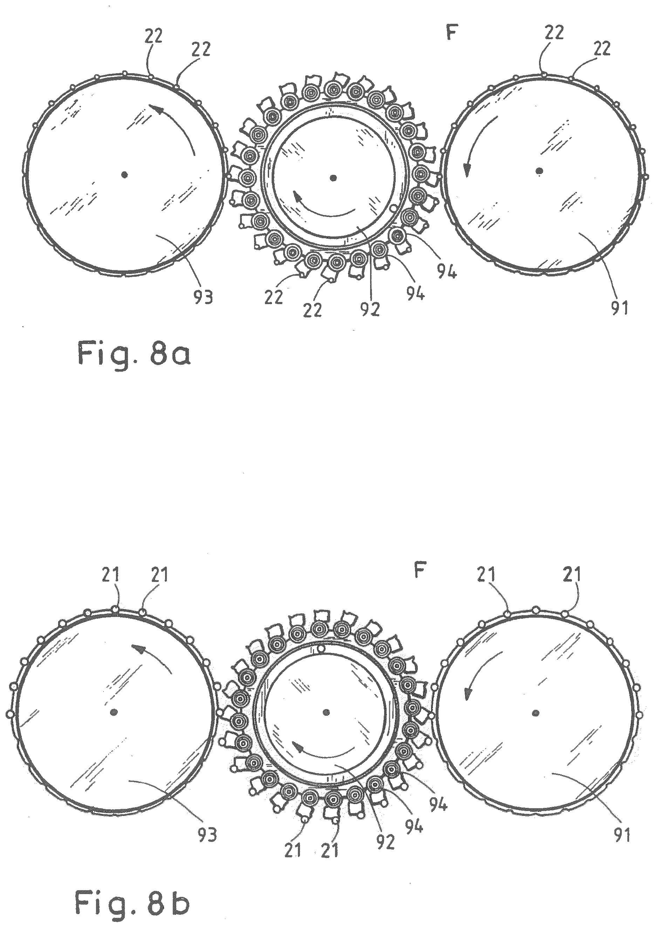

- Fig. 8a, 8b: schematisch jeweils eine Ansicht einer Anordnung von Fördertrommeln einer Filteransetzmaschine mit einer Fördertrommel mit verschwenkbaren Ärmchen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

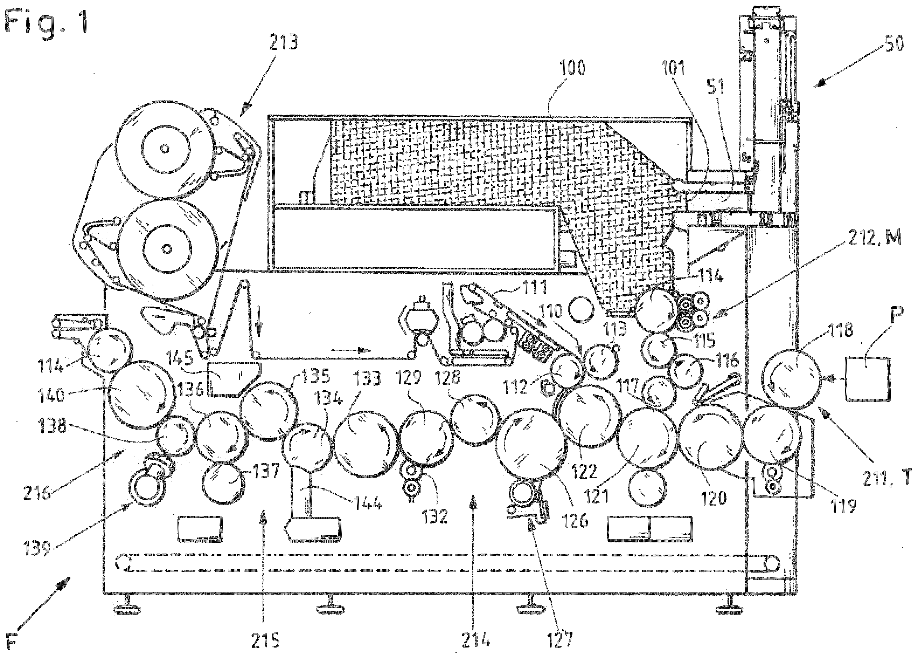

In Fig. 1 ist eine Filteransetzmaschine F in einer Vorderansicht ausschnittsweise dargestellt, wobei die Filteransetzmaschine F über eine Trommelanordnung T zur Zuführung von Tabakstöcken von einer schematisch eingezeichneten Zigarettenstrangmaschine P Tabakstöcke doppelter Gebrauchslänge empfängt.

Eine Zigarettenstrangmaschine ist unter der Bezeichnung "PRO-TOS" der HAUNI Maschinenbau AG, Hamburg, bekannt. Unter der Bezeichnung "MAX" ist eine Filteransetzmaschine der HAUNI Maschinenbau AG, Hamburg, als Maschine der Tabak verarbeitenden Industrie bekannt.

Die in Figur 1 schematisch gezeigte Filteransetzmaschine F weist verschiedene Funktionseinheiten auf: eine Tabakstockzufuhreinrichtung 211 mit einer Trommelanordnung T, eine Filterzufuhreinrichtung 212 mit einer Trommelanordnung M, eine Belagpapierzufuhreinrichtung 213, eine Zigarettenherstelleinrichtung 214.

## Patentansprüche

1. Verfahren zum Fördern von stabförmigen Artikeln (21, 22) der Tabak verarbeitenden Industrie, insbesondere Filterzigaretten oder deren stabförmige Komponenten, wobei die stabförmigen Artikel (21, 22) in Aufnahmemulden von Fördertrommeln (91, 92, 93) unter Rotation der Fördertrommeln (91, 92, 93) queraxial gefördert werden, wobei die um jeweils eine eigene Rotationsachse rotierenden oder rotierbaren Fördertrommeln (91, 92, 93) in queraxialer Förderrichtung der stabförmigen Artikel (21, 22) hintereinander angeordnet sind, wobei die in wenigstens einer Reihe queraxial hintereinander angeordneten Artikel (21, 22) auf einer ersten Fördertrommel (91) in den Aufnahmemulden queraxial zu einem ersten Übergabebereich zwischen der ersten Fördertrommel und einer zweiten Fördertrommel (92) gefördert und im ersten Übergabebereich an die zweite Fördertrommel (92) übergeben werden, nachfolgend die stabförmigen Artikel auf der zweiten Fördertrommel (92) zu einem zweiten Übergabebereich zwischen der zweiten Fördertrommel (92) und einer dritten Fördertrommel (93) gefördert und im zweiten Übergabebereich an die dritte Fördertrommel (93) übergeben werden, wobei im Anschluss daran die stabförmigen Artikel auf der dritten Fördertrommel (93) in den Aufnahmemulden queraxial weiter gefördert werden, wobei die stabförmigen Artikel (21, 22) an die Aufnahmemulden der zweiten Fördertrommel (92) übergeben werden, wobei die Aufnahmemulden der zweiten Fördertrommel (92) auf verschwenkbaren Ärmchen (94) der zweiten Fördertrommel (92) ausgebildet sind, wobei die Ärmchen (94) während der Rotation der Fördertrommel bei einem Umlauf jeweils mittels einer Schwenkkulisse um ihre jeweiligen Schwenkachsen verschwenkt werden, **dadurch gekennzeichnet, dass** durch die Schwenkkulisse die Aufnahmemulden mindestens zwei identische elliptische Bewegungsabschnitte während eines Umlaufs ausführen, wobei die Schwenkkulisse in Abhängigkeit des Durchmessers der mittels der zweiten Fördertrommel (92) zu fördernden stabförmigen Artikel eingestellt wird oder ist, wobei bei Förderung von stabförmigen Artikeln (21) einer ersten Art die in den Aufnahmemulden der zweiten Fördertrommel (92) angeordneten stabförmigen Artikel (21) mit ihren Mittenlängsachsen auf einer ersten Ellipsenbogenbahn zwischen dem ersten Übergabebereich und dem zweiten Übergabebereich gefördert werden und nach einem Wechsel bei Förderung von stabförmigen Artikeln (22) einer zweiten Art mit einem Durchmesser, der sich vom Durchmesser der Artikel (21) der ersten Art unterscheidet, die in den Aufnahmemulden der zweiten Fördertrommel (92) angeordneten stabförmigen Artikel (22) der zweiten Art mit ihren Mittenlängsachsen auf einer zweiten Ellipsenbogenbahn zwischen dem ersten Übergabebereich und dem zweiten Übergabebereich gefördert werden, wobei für den Wechsel der zu fördernden stabförmigen Artikel (21, 22) die Position der mit den Ärmchen (94) zusammenwirkenden Schwenkkulisse verändert wird oder ist.

2. Verfahren nach Anspruch 1, **dadurch gekennzeichnet, dass** die Artikel auf einer ersten Fördertrommel (91) in den Aufnahmemulden mit einem konstanten Teilungsabstand queraxial zum ersten Übergabebereich gefördert werden, so dass die Mittenlängsachsen der stabförmigen Artikel entlang eines Kreisbogens mit einem vorbestimmten, insbesondere konstanten, Kreisbogenradius auf der ersten Fördertrommel (91) gefördert werden, und/oder dass die stabförmigen Artikel (21, 22) auf der dritten Fördertrommel (93) in den Aufnahmemulden mit einem konstanten Teilungsabstand queraxial weiter gefördert werden, so dass die Mittenlängsachsen der stabförmigen Artikel (21, 22) entlang eines Kreisbogens mit einem vorbestimmten, insbesondere konstanten, Kreisbogenradius auf der dritten Fördertrommel (93) gefördert werden.

3. Verfahren nach Anspruch 1 oder 2, **dadurch gekennzeichnet, dass** die Aufnahmemulden der zweiten Fördertrommel (92) im ersten Übergabebereich und im zweiten Übergabebereich einen Abschnitt einer ellipsenbogenförmigen Bewegungsbahn ausführen.

4. Verfahren nach einem der Ansprüche 1 bis 3, **dadurch gekennzeichnet, dass**
- bei Förderung von stabförmigen Artikeln (21) einer ersten Art die Mittenlängsachsen der stabförmigen Artikel (21) der ersten Art auf der ersten Fördertrommel (91) entlang eines Kreisbogens mit einem vorbestimmten, insbesondere konstanten, Kreisbogenradius gefördert werden und
- bei Förderung von stabförmigen Artikeln (21) einer ersten Art die Mittenlängsachsen der stabförmigen Artikel (21) auf der dritten Fördertrommel (93) entlang eines Kreisbogens mit einem vorbestimmten, insbesondere konstanten, Kreisbogenradius gefördert werden,
- wobei nach einem Wechsel der zu fördernden stabförmigen Artikel bei Förderung von stabförmigen Artikeln (22) einer zweiten Art, deren Durchmesser sich vom Durchmesser der Artikel (21) der ersten Art unterscheidet, die Mittenlängsachsen der stabförmigen Artikel (22) der zweiten Art auf der ersten Fördertrommel (91) entlang eines Kreisbogens mit einem vorbestimmten, insbesondere konstanten, Kreisbogenradius, der vom Kreisbogenradius bei Förderung der stabförmigen Artikel (21) der ersten Art auf der ersten Fördertrommel (91) verschieden ist, gefördert werden und
- wobei bei Förderung von stabförmigen Artikeln (22) einer zweiten Art die Mittenlängsachsen der stabförmigen Artikel (22) der zweiten Art auf der dritten Fördertrommel (93) entlang eines Kreisbogens mit einem vorbestimmten, insbesondere konstanten, Kreisbogenradius, der vom Kreisbogenradius bei Förderung der stabförmigen Artikel (21) der ersten Art auf der dritten Fördertrommel (93) verschieden ist, gefördert werden.

5. Verfahren nach einem der Ansprüche 1 bis 4, **dadurch gekennzeichnet, dass** die für die Förderung der stabförmigen Artikel (21, 22) vorgesehenen Fördertrommeln (31, 32, 33, 71, 81) beibehalten werden.

6. Anordnung zum Fördern von stabförmigen Artikeln (21, 22) der Tabak verarbeitenden Industrie, insbesondere Filterzigaretten oder deren stabförmige Komponenten, mit mehreren, um jeweils eine eigene Rotationsachse rotierenden oder rotierbaren Fördertrommeln (91, 92, 93) zur queraxialen Förderung von stabförmigen Artikeln (21, 22) der Tabak verarbeitenden Industrie, wobei die Fördertrommeln (91, 92, 93) in queraxialer Förderrichtung der stabförmigen Artikel (21, 22) hintereinander angeordnet sind, wobei die Fördertrommeln (91, 92, 93) zur Aufnahme von stabförmigen Artikeln (21, 22) jeweils mit Aufnahmemulden mit einer Muldenkontur ausgebildet sind, wobei die Aufnahmemulden wenigstens einer Fördertrommel (92) auf verschwenkbaren Ärmchen (94) einer Fördertrommel (92) ausgebildet sind, wobei die Ärmchen (94) während der Rotation der Fördertrommel (92) bei einem Umlauf jeweils mittels einer Schwenkkulisse um ihre jeweiligen Schwenkachsen verschwenkt werden, **dadurch gekennzeichnet, dass** die mit der Schwenkkulisse ausgebildete Fördertrommel (92) zwischen einer ersten Fördertrommel (91) und einer dritten Fördertrommel (93) in Bezug auf die Förderrichtung der stabförmigen Artikel (21, 22) ausgebildet ist und dass durch die Schwenkkulisse die Aufnahmemulden mindestens zwei identische elliptische Bewegungsabschnitte während eines Umlaufs ausführen, wobei die Schwenkkulisse in Abhängigkeit des Durchmessers der mittels der Fördertrommel (92) zu fördernden stabförmigen Artikel (21, 22) eingestellt wird oder einstellbar ist, wobei die Fördertrommel (92) derart ausgebildet ist, dass für die Förderung von stabförmigen Artikeln (21) einer ersten Art die in den Aufnahmemulden der Fördertrommel (92) angeordneten stabförmigen Artikel mit ihren Mittenlängsachsen auf einer ersten Ellipsenbogenbahn zwischen einem ersten Übergabebereich zur Aufnahme von stabförmigen Artikeln (21, 22) und dem zweiten Übergabebereich zur Abgabe von stabförmigen Artikeln (21, 22) förderbar sind und nach einem Wechsel für die Förderung von stabförmigen Artikeln (21, 22) einer zweiten Art mit einem Durchmesser, der sich vom Durchmesser der Artikel (21) der ersten Art unterscheidet, die in den Aufnahmemulden der Fördertrommel (92) angeordneten stabförmigen Artikel (22) der zweiten Art mit ihren Mittenlängsachsen auf einer zweiten Ellipsenbogenbahn zwischen dem ersten Übergabebereich und dem zweiten Übergabebereich förderbar sind, wobei für den Wechsel der zu fördernden stabförmigen Artikel die Position der mit den Ärmchen (94) zusammenwirkenden Schwenkkulisse verändert wird oder ist.

7. Maschine der Tabak verarbeitenden Industrie, insbesondere Filteransetzmaschine (F), zur Herstellung von stabförmigen Artikeln der Tabak verarbeitenden Industrie, insbesondere Filterzigaretten, mit einer Anordnung nach Anspruch 6.

## Claims

1. Method for conveying rod-like articles (21, 22) in the tobacco-processing industry, in particular filter cigarettes or rod-like components thereof, wherein the rod-like articles (21, 22) are conveyed, in a direction transverse to the axial direction, in receiving troughs of conveying drums (91, 92, 93) as the conveying drums (91, 92, 93) rotate, wherein the conveying drums (91, 92, 93), which each rotate or can rotate about their own axis of rotation, are arranged one behind the other in the direction in which the rod-like articles (21, 22) are conveyed, which is transverse to the axial direction, wherein the articles (21, 22) on a first conveying drum (91), which are arranged in at least one row one behind the other in a direction transverse to the axial direction, are conveyed in the receiving troughs, in a direction transverse to the axial direction, to a first transfer region between the first conveying drum and a second conveying drum (92) and are transferred to the second conveying drum (92) in the first transfer region, then the rod-like articles on the second conveying drum (92) are conveyed to a second transfer region between the second conveying drum (92) and a third conveying drum (93) and are transferred to the third conveying drum (93) in the second transfer region, wherein then the rod-like articles on the third conveying drum (93) are further conveyed in the receiving troughs in a direction transverse to the axial direction, wherein the rod-like articles (21, 22) are transferred to the receiving troughs of the second conveying drum (92), wherein the receiving troughs of the second conveying drum (92) are formed on pivotable arms (94) of the second conveying drum (92), wherein the arms (94) are pivoted about their respective pivot axes in each case by a pivot motion link as the conveying drums rotate through one revolution, **characterised in that**, by virtue of the pivot motion link, the receiving troughs execute at least two identical elliptical movement portions during one revolution, wherein the pivot motion link or will be or is adjusted as a function of the diameter of the rod-like articles to be conveyed by the second conveying drum (92), wherein when conveying rod-like articles (21) of a first type, the rod-like articles (21) arranged in the receiving troughs of the second conveying drum (92) are conveyed with their central longitudinal axes on a first elliptical arc path between the first transfer region and the second transfer region and, after a changeover, when conveying rod-like articles (22) of a second type having a diameter that differs from the diameter of the articles (21) of the first type, the rod-like articles (22) of the second type arranged in the receiving troughs of the second conveying drum (92) are conveyed with their central longitudinal axes on a second elliptical arc path between the first transfer region and the second transfer region, wherein, for the changeover of the rod-like articles (21, 22) to be conveyed, the position of the pivot motion link cooperating with the arms (94) will be or is changed.

2. Method according to claim 1, **characterised in that** the articles on a first conveying drum (91) are conveyed in the receiving troughs with a constant spacing, in a direction transverse to the axial direction, to the first transfer region in such a way that the central longitudinal axes of the rod-like articles are conveyed on the first conveying drum (91) along a circular arc having a predetermined, in particular constant, circular arc radius, and/or **in that** the rod-like articles (21, 22) on the third conveying drum (93) are further conveyed in the receiving troughs with a constant spacing, in a direction transverse to the axial direction, in such a way that the central longitudinal axes of the rod-like articles (21, 22) are conveyed on the third conveying drum (93) along a circular arc having a predetermined, in particular constant, circular arc radius.

3. Method according to claim 1 or 2, **characterised in that** the receiving troughs of the second conveying drum (92) execute a portion of an elliptical arc-shaped movement path in the first transfer region and in the second transfer region.

4. Method according to any of claims 1 to 3, **characterised in that**
- when conveying rod-like articles (21) of a first type, the central longitudinal axes of the rod-like articles (21) of the first type are conveyed on the first conveying drum (91) along a circular arc having a predetermined, in particular constant, circular arc radius, and
- when conveying rod-like articles (21) of a first type, the central longitudinal axes of the rod-like articles (21) are conveyed on the third conveying drum (93) along a circular arc having a predetermined, in particular constant, circular arc radius,
- wherein, after a changeover of the rod-like articles to be conveyed, when conveying rod-like articles (22) of a second type, the diameter of which differs from the diameter of the articles (21) of the first type, the central longitudinal axes of the rod-like articles (22) of the second type are conveyed on the first conveying drum (91) along a circular arc having a predetermined, in particular constant, circular arc radius that is different from the circular arc radius when conveying the rod-like articles (21) of the first type on the first conveying drum (91), and
- wherein, when conveying rod-like articles (22) of a second type, the central longitudinal axes of the rod-like articles (22) of the second type are conveyed on the third conveying drum (93) along a circular arc having a predetermined, in particular constant, circular arc radius that is different from the circular arc radius when conveying the rod-like articles (21) of the first type on the third conveying drum (93).

5. Method according to any of claims 1 to 4, **characterised in that** the conveying drums (31, 32, 33, 71, 81) provided for conveying the rod-like articles (21, 22) are retained.

6. Arrangement for conveying rod-like articles (21, 22) in the tobacco-processing industry, in particular filter cigarettes or rod-like components thereof, comprising a plurality of conveying drums (91, 92, 93) which each rotate or can rotate about their own axis of rotation for conveying rod-like articles (21, 22) of the tobacco-processing industry in a direction transverse to the axial direction, wherein the conveying drums (91, 92, 93) are arranged one behind the other in the direction in which the rod-like articles (21, 22) are conveyed, which is transverse to the axial direction, wherein the conveying drums (91, 92, 93) are designed to receive rod-like articles (21, 22) in each case by way of receiving troughs having a trough contour, wherein the receiving troughs of at least one conveying drum (92) are formed on pivotable arms (94) of a conveying drum (92), wherein the arms (94) are pivoted about their respective pivot axes in each case by a pivot motion link as the conveying drum (92) rotates through one revolution, **characterised in that**, by virtue of the pivot motion link, the receiving troughs execute at least two identical elliptical movement portions during one revolution, wherein the pivot motion link is adjusted as a function of the diameter of the rod-like articles (21, 22) to be conveyed by the conveying drum (92), wherein the conveying drum (92) formed with the pivot motion link is formed between a first conveying drum (91) and a third conveying drum (93) relative to the direction in which the rod-like articles (21, 22) are conveyed, wherein the conveying drum (92) is configured in such a way that, for conveying rod-like articles (21) of a first type, the rod-like articles arranged in the receiving troughs of the conveying drum (92) can be conveyed with their central longitudinal axes on a first elliptical arc path between a first transfer region for receiving rod-like articles (21, 22) and the second transfer region for discharging rod-like articles (21, 22), and, after a changeover, for conveying rod-like articles (21, 22) of a second type having a diameter that differs from the diameter of the articles (21) of the first type, the rod-like articles (22) of the second type arranged in the receiving troughs of the conveying drum (92) can be conveyed with their central longitudinal axes on a second elliptical arc path between the first transfer region and the second transfer region, wherein, for the changeover of the rod-like articles to be conveyed, the position of the pivot motion link cooperating with the arms (94) will be or is changed.

7. Machine for the tobacco-processing industry, in particular a filter-attaching machine (F), for producing rod-like articles in the tobacco-processing industry, in particular filter cigarettes, having an arrangement according to claim 6.

## Revendications

1. Procédé pour transporter des articles en forme de bâtonnet (21, 22) de l'industrie de transformation du tabac, en particulier des cigarettes filtres ou des composants en forme de bâtonnet de celles-ci, dans lequel les articles en forme de bâtonnet (21, 22) sont transportés dans des auges de réception de tambours transporteurs (91, 92, 93) dans le sens transversal à l'axe par la rotation des tambours transporteurs (91, 92, 93), les tambours transporteurs (91, 92, 93), tournant ou pouvant tourner chacun autour de son propre axe de rotation, étant disposés les uns derrière les autres dans le sens de transport transversal à l'axe des articles en forme de bâtonnet (21, 22), les articles (21, 22) disposés les uns derrière les autres dans le sens transversal à l'axe en au moins une rangée sur le premier tambour transporteur (91) étant transportés, dans les auges de réception, dans le sens transversal à l'axe, vers une première zone de transfert entre le premier tambour transporteur et un deuxième tambour transporteur (92) et étant transférés dans la première zone de transfert au deuxième tambour transporteur (92), puis les articles en forme de bâtonnet sur le deuxième tambour transporteur (92) étant transportés vers une deuxième zone de transfert entre le deuxième tambour transporteur (92) et un troisième tambour transporteur (93) et étant transférés dans une deuxième zone de transfert au troisième tambour transporteur (93), les articles en forme de bâtonnet sur le troisième tambour transporteur (93) étant ensuite transportés plus loin dans le sens transversal à l'axe dans les auges de réception, les articles en forme de bâtonnet (21, 22) étant transférés aux auges de réception du deuxième tambour transporteur (92), les auges de réception du deuxième tambour transporteur (92) étant réalisées sur des petits bras pivotants (94) du deuxième tambour transporteur (92), les petits bras (94) subissant sur un tour, pendant la rotation du tambour transporteur, un pivotement, chacun à l'aide d'une coulisse de pivotement, autour de leurs axes de pivotement, **caractérisé en ce que**, grâce à la coulisse de pivotement, les auges de réception exécutent pendant un tour au moins deux segments de trajectoire elliptiques identiques, la coulisse de pivotement étant ajustée ou ayant été ajustée en fonction du diamètre des articles en forme de bâtonnet devant être transportés à l'aide du deuxième tambour transporteur (92), dans lequel lors du transport d'articles en forme de bâtonnet (21) d'un premier type, les articles en forme de bâtonnet (21) disposés dans les auges de réception du deuxième tambour transporteur (92) sont, par leurs axes longitudinaux centraux, transportés sur une première trajectoire en arc d'ellipse entre la première zone de transfert et la deuxième zone de transfert et, après un changement, lors du transport d'articles en forme de bâtonnet (22) d'un deuxième type ayant un diamètre qui est différent du diamètre des articles (21) du premier type, les articles en forme de bâtonnet (22) du deuxième type, disposés dans les auges de réception du deuxième tambour transporteur, sont, par leurs axes longitudinaux centraux, transportés sur une deuxième trajectoire en arc d'ellipse entre la première zone de transfert et la deuxième zone de transfert, auquel cas, pour le changement des articles en forme de bâtonnet (21, 22) à transporter, la position de la coulisse de pivotement, qui coopère avec les petits bras (94), est ou a été modifiée.

2. Procédé selon la revendication 1, **caractérisé en ce que** les articles sur un premier tambour transporteur (91) sont transportés dans les auges de réception, avec un pas constant, dans un sens transversal à l'axe vers une première zone de transfert, de telle sorte que les axes longitudinaux centraux des articles en forme de bâtonnet sont transportés le long d'un arc de cercle ayant un rayon d'arc de cercle prédéfini, en particulier constant, sur le premier tambour transporteur (91), et/ou que les articles en forme de bâtonnet (21, 22) sur le troisième tambour transporteur (93) sont transportés plus loin dans les auges de réception, avec un pas constant dans le sens transversal à l'axe, de telle sorte que les axes longitudinaux centraux des articles en forme de bâtonnet (21, 22) sont transportés le long d'un arc de cercle ayant un rayon d'arc de cercle prédéfini, en particulier constant, sur le troisième tambour transporteur (93).

3. Procédé selon la revendication 1 ou 2, **caractérisé en ce que** les auges de réception du deuxième tambour transporteur (92) exécutent dans la première zone de transfert et dans la deuxième zone de transfert un segment d'une trajectoire en forme d'arc d'ellipse.

4. Procédé selon l'une des revendications 1 à 3, **caractérisé en ce que**
- lors du transport d'articles en forme de bâtonnet (21) d'un premier type, les axes longitudinaux centraux des articles en forme de bâtonnet (21) du premier type sont transportés sur le premier tambour transporteur (91) le long d'un arc de cercle ayant un rayon d'arc de cercle prédéfini, en particulier constant, et
- lors du transport d'articles en forme de bâtonnet (21) d'un premier type, les axes longitudinaux centraux des articles en forme de bâtonnet (21) sont transportés sur le troisième tambour transporteur (93) le long d'un arc de cercle ayant un rayon d'arc de cercle prédéfini, en particulier constant,
- où après un changement des articles en forme de bâtonnet à transporter, lors du transport d'articles en forme de bâtonnet (22) d'un deuxième type, dont le diamètre est différent du diamètre des articles (21) du premier type, les axes longitudinaux centraux des articles en forme de bâtonnet (22) du deuxième type sont transportés sur le premier tambour transporteur (91) le long d'un arc de cercle ayant un rayon d'arc de cercle prédéfini, en particulier constant, qui est différent du rayon d'arc de cercle que l'on a lors du transport des articles en forme de bâtonnet (21) du premier type sur le premier tambour transporteur (91), et
- où lors du transport d'articles en forme de bâtonnet (22) d'un deuxième type, les axes longitudinaux centraux des articles en forme de bâtonnet (22) du deuxième type sont transportés sur le troisième tambour transporteur (93) le long d'un arc de cercle ayant un rayon d'arc de cercle prédéfini, en particulier constant, qui est différent du rayon d'arc de cercle que l'on a lors du transport des articles en forme de bâtonnet (21) du premier type sur le troisième tambour transporteur (93).

5. Procédé selon l'une des revendications 1 à 4, **caractérisé en ce que** les tambours transporteurs (31, 32, 33, 71, 81) prévus pour le transport des articles en forme de bâtonnet (21, 22) sont conservés.

6. Agencement pour le transport d'articles en forme de bâtonnet (21, 22) de l'industrie de transformation du tabac, en particulier de cigarettes filtres ou de composants en forme de bâtonnet de celles-ci, comprenant plusieurs tambours transporteurs (91, 92, 93) tournant chacun ou pouvant chacun tourner autour de son propre axe de rotation, pour le transport transversal à l'axe d'articles en forme de bâtonnet (21, 22) de l'industrie de transformation du tabac, les tambours transporteurs (91, 92, 93) étant disposés les uns derrière les autres dans la direction de transport transversale à l'axe des articles en forme de bâtonnet (21, 22), les tambours transporteurs (91, 92, 93) étant, pour la réception d'articles en forme de bâtonnet (21, 22), conçus chacun avec des auges de réception présentant un contour d'auge, les auges de réception d'au moins un tambour transporteur (92) étant réalisées sur des petits bras pivotants (94) d'un tambour transporteur (92), les bras (94) subissant chacun, pendant la rotation des tambours transporteurs (92) sur un tour, un pivotement à l'aide d'une coulisse de pivotement autour de leur propre axe de pivotement, **caractérisé en ce que**, grâce à la coulisse de pivotement, les auges de réception exécutent au moins deux trajectoires elliptiques identiques pendant un tour, la coulisse de pivotement étant ou pouvant être ajustée en fonction du diamètre des articles en forme de bâtonnet (21, 22) devant être transportés à l'aide du tambour transporteur (92), dans lequel les tambours transporteurs (92) réalisés avec la coulisse de pivotement sont configurés entre un premier tambour transporteur (91) et un troisième tambour transporteur (93), par rapport au sens de déplacement des articles en forme de bâtonnet (21, 22), dans lequel les tambours transporteurs (92) sont configurés de telle sorte que, pour le transport des articles en forme de bâtonnet (21) d'un premier type, les articles en forme de bâtonnet disposés dans les auges de réception du tambour transporteur (92) peuvent être transportés, par leurs axes longitudinaux centraux, sur une première trajectoire en arc d'ellipse entre une première zone de transfert destinée à recevoir des articles en forme de bâtonnet (21, 22) et la deuxième zone de transfert destinée à délivrer des articles en forme de bâtonnet (21, 22), et, après un changement pour le transport d'articles en forme de bâtonnet (21, 22) d'un deuxième type, ayant un diamètre qui est différent du diamètre des articles (21) du premier type, les articles en forme de bâtonnet (22) du deuxième type, disposés dans les auges de réception du tambour transporteur (92), peuvent être transportés par leurs axes longitudinaux centraux sur une deuxième trajectoire en arc d'ellipse entre la première zone de transfert et la deuxième zone de transfert, la position de la coulisse de pivotement qui coopère avec les petits bras (94) étant ou ayant été modifiée pour le changement des articles en forme de bâtonnet à transporter.

7. Machine de l'industrie de transformation du tabac, en particulier assembleuse de bouts-filtres (F), destinée à la fabrication d'articles en forme de bâtonnet de l'industrie de transformation du tabac, en particulier de cigarettes filtres, comportant un agencement selon la revendication 6.
